# EUROPEAN PATENT SPECIFICATION

(11) **EP 0 477 437 B1**
(45) Date of publication and mention of the grant of the patent: **15.12.1993**
(21) Application number: 90202564.2
(22) Date of filing: 28.09.1990
(51) Int. Cl.: A01B 13/14

(54) **A method of reversing the order of two superimposed layers of soil, and a reversible plough for the application of said method**
Methode zur Umkehr der Reihenfolge zweier übereinanderliegenden Bodenschichten und ein umdrehbarer Pflug zur Anwendung besagter Methode
Méthode pour renverser l'ordre de deux couches superposées d'un terrain, et une charrue renversable pour l'application de ladite méthode

(43) Date of publication of application: 01.04.1992
(73) Proprietor: Mantingh, Jan, NL-9511 PT Gieterveen (NL)
(72) Inventor: Mantingh, Jan, NL-9511 PT Gieterveen (NL)
(74) Representative: Smulders, Theodorus A.H.J., Ir.

(56) References cited:
- DE-A- 1 949 057
- NL-C- 92 304

## Description

The invention relates to a method of reversing the order of a top layer of soil and a subjacent layer of soil, and to a plough for applying said method.

It is well-known that agricultural and horticultural grounds often comprise a relatively thin top layer of mould, which is provided on an infertile or less fertile layer of soil, such as sand. In practice, the thickness of the top layer of mould may for instance be about 20 cm.

Often it is desirable for agricultural grounds to be levelled, since water may fail to drain from lower portions of a field, so that such portions remain too humid, while the higher portions remain too dry. In such cases soil must be moved from the higher portions to the lower portions. In doing so, however, the fertile top layer must be preserved as much as possible and also a mixing of the fertile mould and the subsoil must be prevented.

The desired effect can be achieved for instance by digging off the top layers at the higher portions and at the lower portions and depositing them elsewhere temporarily. Then subsoil sand is moved from the higher portions to the lower portions, followed by levelling the high and low portions and finally applying a top layer on the former high and low portions again.

This method, which could for instance be carried out with a shovel, is very laborious and there is a great chance that the mould is mixed with the subsoil sand.

NL-C-92.304 discloses a method and a plough according to the preamble of claims 1 and 5 respectively, for reversing the order of a top layer of soil and a subjacent layer of soil wherein in a first pass a first deep furrow extending into the subjacent layer of soil is made by means of a first plough-share, the soil ploughed from said deep furrow being deposited on one side of said deep furrow, wherein simultaneously the strip of the top layer of soil located on the other side adjacent to the deep furrow is ploughed into said deep furrow by a second plough-share; and wherein in a second pass at the original location of the strip of the top layer of soil ploughed into said first deep furrow, a next deep furrow is formed and the soil coming from said next deep furrow is deposited on top of the soil of the top layer ploughed into said first deep furrow.

When applying this known method, there is still a good chance that the mould becomes mixed with the subsoil sand, which is undesirable.

This invention aims to provide a method which enables the subsoil to be removed without the top layer of mould being adversely affected. Naturally, such a method can also be used in cases where it is desirable, optionally as an intermediate step in another method, to impose a subsoil layer on top of a top layer of soil.

To this end, according to the invention as claimed in claim 1 a method of the type described in the above is characterized in that both side walls of said deep furrow are smoothed and laterally supported before and during the ploughing of the soil of the top layer into the deep furrow.

A plough as claimed in claim 5 for applying the method is characterized by support means brushing along and smoothing both side walls of the deep furrow behind the first ploughshare, for keeping the deep furrow clear.

One embodiment of the invention will now be further explained and illustrated with reference to the accompanying drawings, in which:
Fig. 1 is a schematic view of one basic embodiment of a reversible plough according to the invention;
Fig. 2 schematically shows the reversible plough of Fig. 1, provided with a number of aids;
Fig. 3, for the sake of completeness, separately shows the aids in the position they take up relatively to each other when mounted;
Figs. 4-8 schematically show the operation of a reversible plough according to the invention as well as the effect of the various aids.

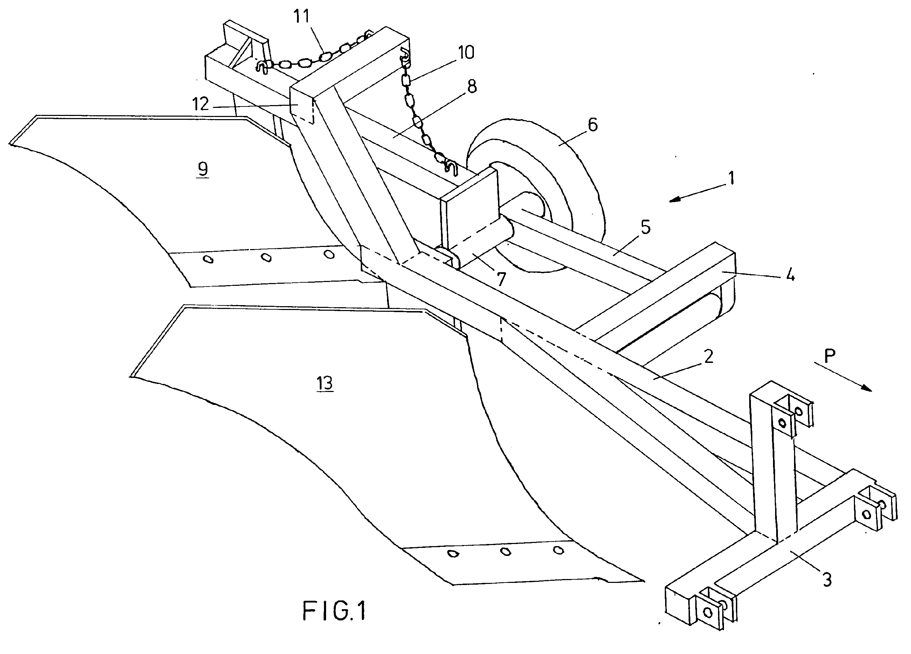

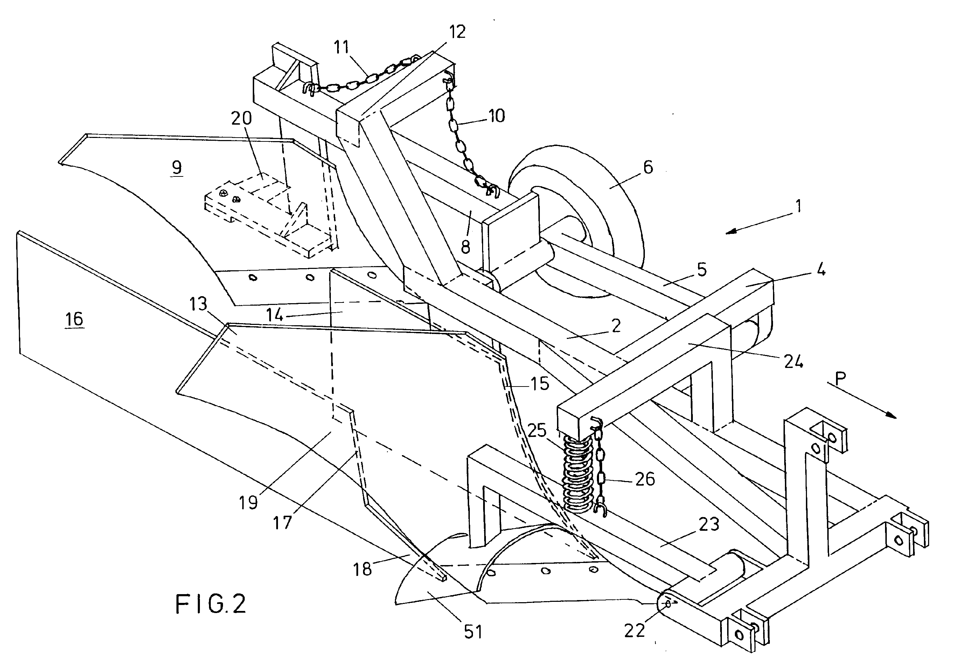

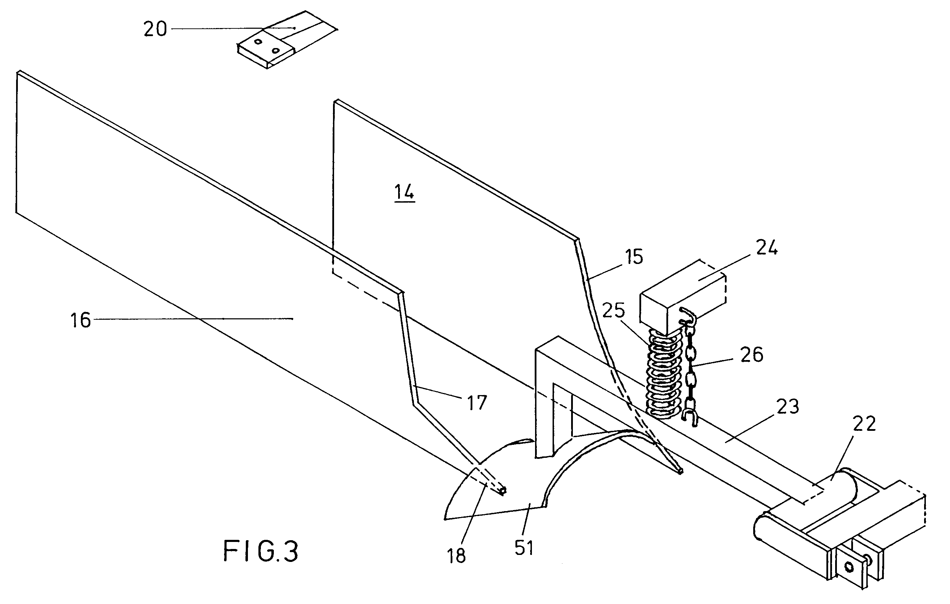

Figs. 1-2 schematically show one embodiment of a reversible plough 1 according to the invention, Fig. 1 showing it without, and Fig. 2 showing it with, the aids separately shown in Fig. 3.

The reversible plough 1 as shown has a frame 2 which is provided with an attachment member 3 which in known manner can be coupled to the three-point hitch of a tractor. The direction of travel during operation is indicated by means of an arrow P.

The frame 2 mounts in a conventional manner a side arm 4 which pivotably carries a rearwardly directed wheel support arm 5, which is provided with a support wheel 6 which in operation rides alongside the plough furrow and serves for adjustment of the working depth. At the axle (not shown) a bearing bushing 7 is provided which is adapted to pivot, for instance about the extended axle and which in turn carries a rearwardly extending support arm 8 on which a rear ploughshare 9 is mounted. The support arm 8 is suspended from a tail piece 12 of the frame 2, extending above the support arm 8, by means of attachment members which in the embodiment shown are formed by chains 10, 11.

The frame 2 further carries a ploughshare 13 mounted at the beginning of the tail piece in the embodiment shown. Viewed in the direction of travel, the ploughshare 13 is located before the rear ploughshare 9 and extends much deeper than the latter. Indeed, the rear ploughshare 9 serves to work on the top layer while the front ploughshare 13 serves to work on the subsoil. As will be explained hereinafter, the two ploughshares of the reversible plough cooperate in such a way that the front or first ploughshare 13 first forms a furrow extending into the subsoil to the desired depth, after which the second ploughshare 9, located slightly further towards the rear, deposits the strip of the top layer, located adjacent to the deep furrow of the first ploughshare, in the deep furrow. In the subsequent pass the first ploughshare forms a next deep furrow in the subsoil at the original location of the strip of the top layer, deposited in the deep furrow. The material coming from the next deep furrow, for instance subsoil sand, is deposited in the first deep furrow on top of the strip of the top layer already deposited therein. At the same time the second ploughshare ploughs a next strip of the top layer in the newly formed deep furrow. The final outcome is that the original top layer has come to lie under a layer of the original subsoil. When levelling of the grounds is desired, the now superjacent layer of the original subsoil can be removed, for instance by means of an earth moving machine as described in applicants' Dutch patent application 8702301, to be deposited and spread elsewhere. The layer thus applied elsewhere can now be moved back under the original top layer at that location using a reversible plough according to the present invention.

In order to promote the original top layer remaining intact as much as possible, and to prevent a blending of the top layer and the subsoil as much as possible, one or more aids to be described hereinafter can be used in accordance with a further elaboration of the invention.

Fig. 3 separately shows a number of such aids in their mounted position relative to each other, while Fig. 2 shows the plough with the same aids in mounted position. A first aid is formed by a vertical support plate 14 which travels in the deep plough furrow and brushes along the wall of the deep furrow that is located on the side of the strip of the top layer to be ploughed into the deep furrow. The support plate 14 is arranged directly behind the first ploughshare 13 and the front edge 15 of the support plate preferably abuts the first ploughshare as closely as possible. In the embodiment shown the front edge 15 of the support plate forms a curved line which corresponds to the conventional curved form of the first ploughshare 13. The support plate thus prevents the deep furrow from being compressed from the side as a result of the lateral cutting pressure caused by the second ploughshare. Further, the support plate 14 smoothes the corresponding wall of the deep plough furrow, thereby reinforcing the wall and preventing material from crumbling off the wall and falling into the deep furrow.

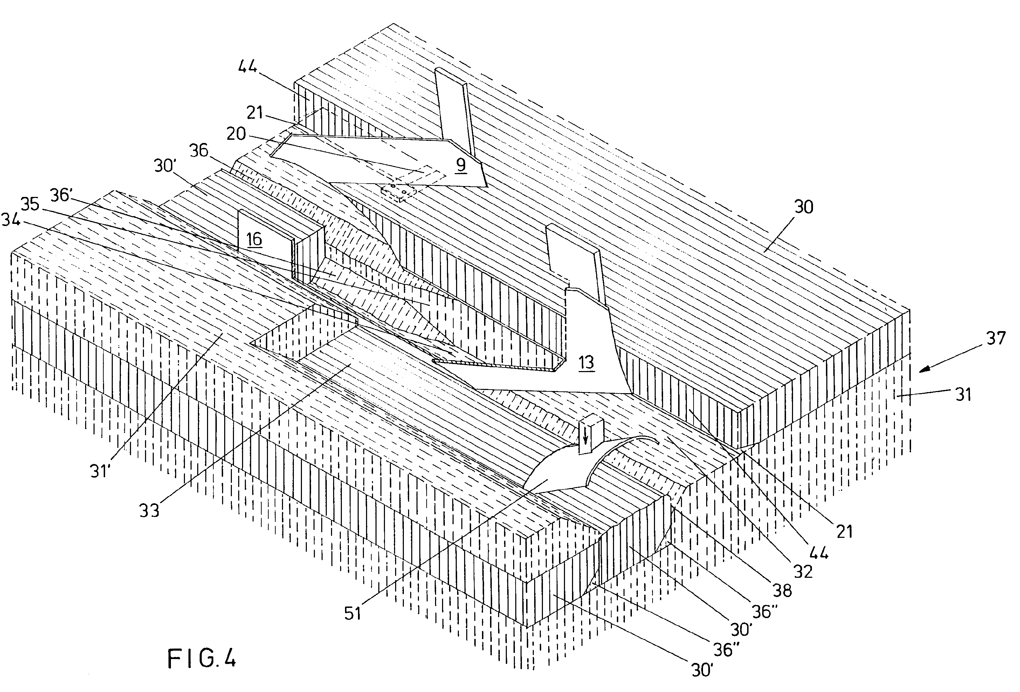

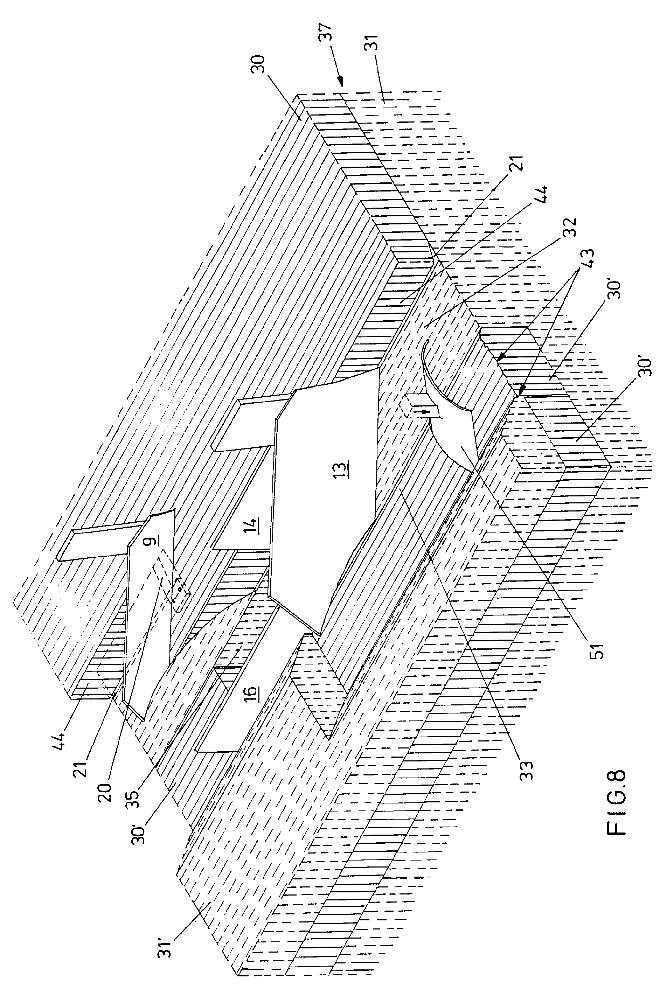

Figs. 4-8 schematically show a soil packet comprising two layers 30, 31 whose relative position is to be reversed. Further, Figs. 4-8 schematically show the various parts of a reversible plough according to the invention which in effect cooperate with the soil. To illustrate the operation of each of the aids, only Fig. 8 shows all aids together with the ploughshares, while in each of Figs. 4-5 an aid has been omitted.

Fig. 4 shows the effect that may occur if the support plate 14 is not used. Whether this effect actually occurs depends on the composition, degree of humidity, etc. of the soil. Fig. 4 shows a top layer of soil 30, for instance mould, disposed on a lower layer of soil 31, for instance sand. It is supposed that the lower layer 31 must be dug off and that for that purpose a layer of sand is to be ploughed from the lower layer 31 onto the mould, to enable subsequent removal of the instant superjacent layer of sand. Fig. 4 shows the second ploughshare 9 partly extending into the mould 30 and the first ploughshare 13, mounted more forwardly in laterally displaced position. The first ploughshare ploughs the sand packet 32 disposed before the first ploughshare, whose top layer of mould has already been removed in a previous pass and is now arranged in the location indicated by 33, onto the mould packet 30', as shown at 31'. Behind the ploughshare 13, of which a part is not shown, the deep plough furrow 34 is to be seen, having a vertical wall 35. However, the support plate 14 is not mounted and the result thereof is a crumbling edge 36 of the deep furrow due to the pressure exerted by the second ploughshare 9. The crumbling soil comes to rest at the bottom of the deep furrow, as indicated at 36'. As a result, the layer of mould 30' eventually disposed under the layer of sand 31' no longer forms a continuous layer but is interspersed at the bottom with sand packets 36'' approximately triangular in cross-section, as shown in Fig. 4 in the plane of section 37. Sooner or later, the sand packets 36'' will be mixed with the mould as a result of the normal working of the soil, which leads to deterioration of the soil.

Figs. 2 and 3 show a second support plate 16, which also travels in the deep furrow behind the first ploughshare, but travels along the wall 38 located opposite the wall 35. The second support plate 16 serves to prevent the sand packet 31' just ploughed from the deep furrow from falling back into the deep furrow again after the ploughshare has passed and before the mould has been deposited at the bottom of the deep furrow. The second support plate comprises a forwardly extending point 18 provided at the front edge 17 at the bottom end thereof, which point extends under the laterally curving portion 19 of the first ploughshare.

The second support plate 16 preferably extends rearwardly so far that the packet of mould deposited in the deep plough furrow by the second ploughshare falls against the second support plate.

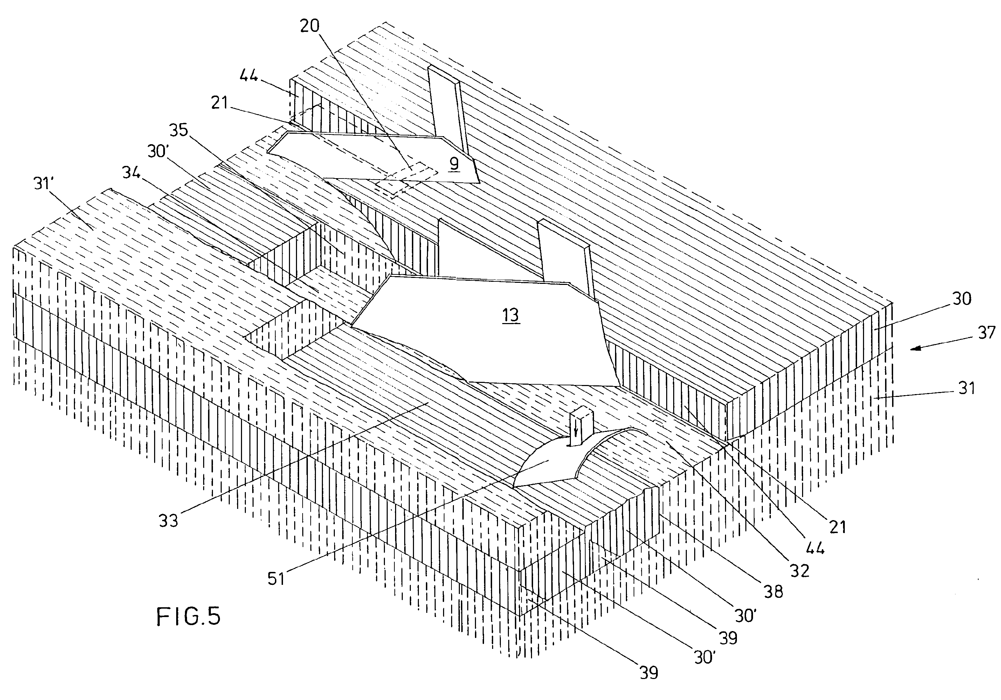

Fig. 5 shows the effect that may occur, but not necessarily so, if the second support plate 16 is not used. In that case sand 31' ploughed from the deep furrow 34 may fall back into the deep furrow before the mould 30' has been deposited in the deep furrow. Fig. 5 illustrates the result in the form of sand packets 39 approximately triangular in cross-section.

Like the support plate 14, the support plate 16 brushes along the corresponding wall of the deep furrow, thereby reinforcing that wall. Together the support plates 14 and 16 keep the deep furrow clear until the second ploughshare deposits the mould in the deep furrow.

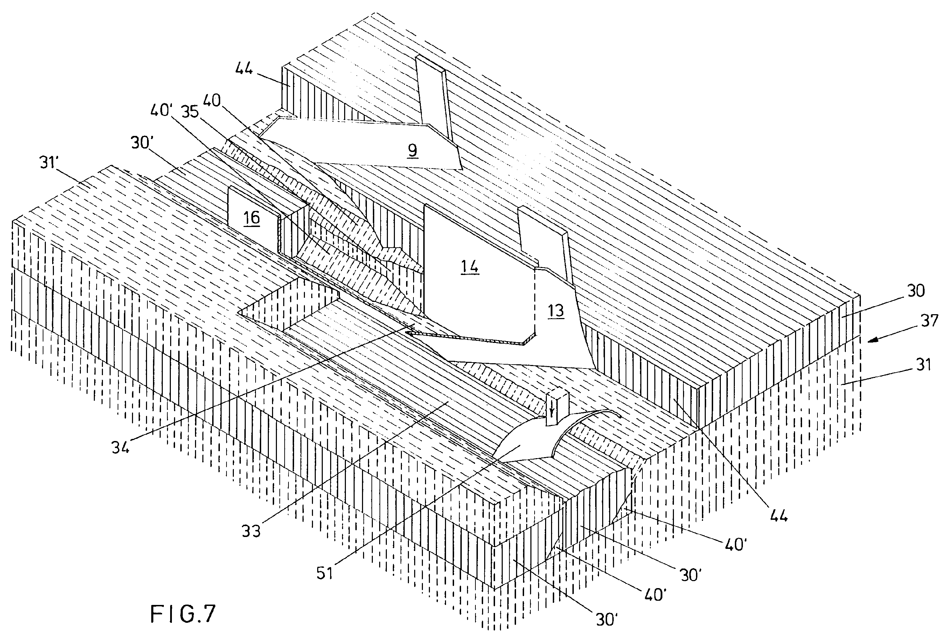

Figs. 2 and 3 show a third aid in the form of lateral knife coulter 20, which is arranged substantially horizontally behind and next to the second ploughshare 9 and which makes a horizontal cut in the as yet unworked soil at the height of the boundary surface between the mould and the subsoil. Figs. 4, 5, 6 and 8 show the horizontal cut at 21. The horizontal cut 21 contributes to the second ploughshare, extending as deep as the lateral knife coulter 20, exclusively depositing mould 30 in the deep furrow 34. If the horizontal knife coulter is not used, as is shown in Fig. 7, the chance exists that along with the mould also subsoil sand will fall into the deep furrow.

Fig. 7 shows the crumbled lower edge of the deep furrow and the soil fallen into the deep furrow at 40 and 40', respectively. Thus, sand packets 40', partly disposed between the mould packets 30', are formed in a similar manner as in the case where the support plate 14 is omitted.

Figs. 2 and 3, finally, show a fourth aid in the form of a float 51 which serves to press on and smooth the mould ploughed into the deep furrow. As shown in Fig. 2, in the embodiment shown the float 51 is mounted on the rear end of an arm 23 extending rearwardly from the front portion of the plough frame and mounted for pivoting movement about a horizontal shaft 22. Arranged between the arm 23 and a fixed bar 24 provided above the arm and mounted on the frame 2 is a compression spring 25 which resiliently presses the float down. Mounted further between the fixed bar 24 and the arm 23 are height adjustment means which in this example are formed by a chain 26 which limits the travel of the arm 23.

In the embodiment shown the float 51 comprises a rectangular plate inclined slightly upwardly in the direction of travel of the plough. As shown, the plate is preferably curved in a direction transverse to the direction of travel and the concave side of the plate is turned towards the ground. In the embodiment shown the float is disposed before the first ploughshare, displaced outwardly in a direction which is opposite to that in which the second ploughshare has been displaced outwardly relative to the first ploughshare.

The float has substantially the same working width as the two ploughshares.

It has been found that when a flat float is used the chance exists that the mould will slightly bulge at the side edges of the plate so that a transverse hollow is formed in the mould. This effect can be prevented by giving the float a concave shape.

As shown in Figs. 4, 5, 7 and 8, in the embodiment shown the float levels the mould already ploughed, in a previous pass, in the deep furrow formed then. The float brings a pressure to bear on the mould and retains it at the moment when the first ploughshare exerts a lateral pressure on the mould via the subsoil sand in the location indicated by 33. In this manner the mould is prevented from being pushed away laterally by the subsoil sand.

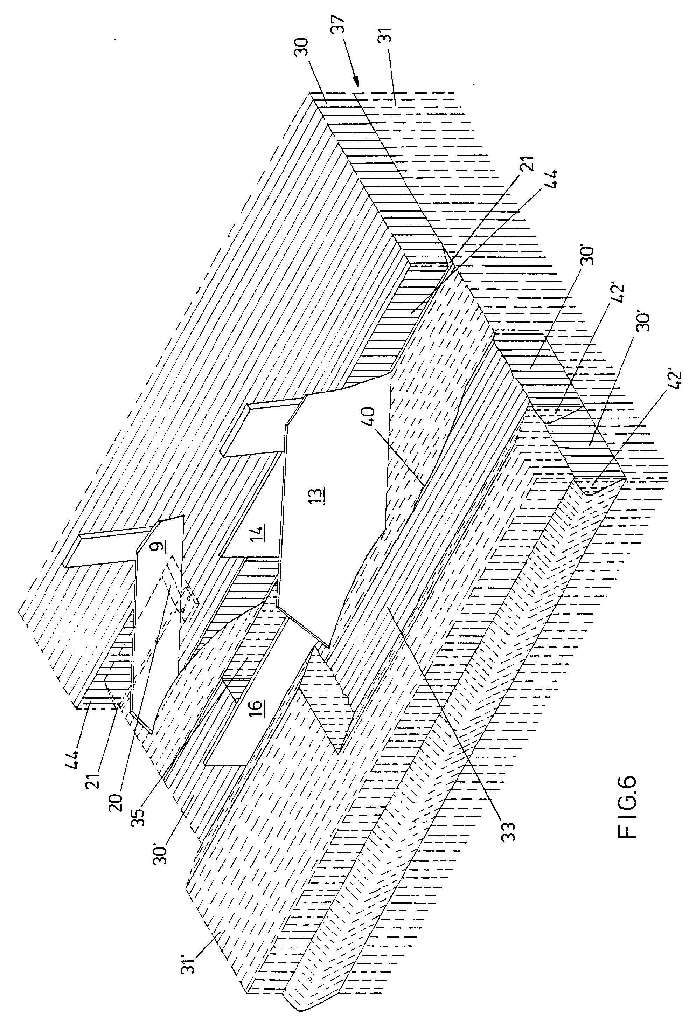

Fig. 6 further illustrates this. In the situation of Fig. 6 the float 51 is not used. Fig. 6 indicates at 42 how in that case the mould ploughed into the deep furrow in the preceding pass can be pushed away laterally by the soil moved up by the second ploughshare 13. The result is that a wedge-shaped strip of Sand 42' is formed at the top between adjacent strips of mould, as can be seen in Fig. 6 in the sectional plane 37.

Fig. 8 schematically shows the operation of a reversible plough according to the invention which is provided with all aids discussed. It can be seen that the strips of mould 30' ploughed into the adjacent deep furrow in successive passes accurately adjoin one another and also have a flat top surface. This last is necessary to enable later, accurate and exclusive removal of the layer 31'.

It is observed that in Fig. 8 in the cross-sectional plane 37 the layer of mould 30' which has not been covered with a subsoil layer 31' does not yet have a top surface that precisely adjoins the layer that has already been covered, as is shown at 43. This, however, is due to the fact that in the situation shown the float 51 has not yet reached the cross-sectional plane 37.

It is observed that, in conventional manner, a vertical knife coulter can be used that precedes the first ploughshare. In a similarly conventional manner a coulter, for instance a disk coulter, may be provided before the second ploughshare.

Further, means may be provided which, prior to the passage of the first ploughshare, smooth the side wall 44 (Fig. 8) of the firm mould, and thereby reinforce it. Such means may comprise a vertical float arranged behind the second ploughshare.

Further, a plough according to the invention may naturally be of multiple construction so that in a single pass a plurality of deep furrows are formed and then filled with soil from the original top layer.

## Claims

1. A method of reversing the order of a top layer (30) of soil and a subjacent layer (31) of soil, wherein in a first pass a first deep furrow (34) extending into the subjacent layer of soil (31) is made by means of a first ploughshare (13), the soil ploughed from said deep furrow being deposited on one side of said deep furrow (34), wherein simultaneously the strip of the top layer of soil located on the other side adjacent to the deep furrow is ploughed into said deep furrow by a second ploughshare (9); and wherein in a second pass at the original location of the strip of the top layer of soil ploughed into said first deep furrow (34), a next deep furrow (34) is formed and the soil coming from said next deep furrow (34) is deposited on top of the soil of the top layer ploughed into said first deep furrow (34), characterized in that both side walls (35,38) of said deep furrow (34) are smoothed and laterally supported before and during the ploughing of the soil of the top layer into the deep furrow (34).

2. A method according to claim 1, characterized in that the soil of the top layer that has been ploughed into a deep furrow (34) is smoothed and pressed on at the top surface before the soil coming from a next deep furrow (34) is ploughed onto the soil of the top layer that has been ploughed into said deep furrow (34).

3. A method according to any one of the preceding claims, characterized in that a horizontal cut (21) is made at the height of the underside of the top layer (30) of soil before said top layer (30) of soil is ploughed into an adjacent deep furrow (34).

4. A method according to any one of the preceding claims, characterized in that the soil of the top layer (30) ploughed into a first deep furrow (34) is retained against lateral pressure from the first ploughshare (13) while the soil from a second deep furrow (34) formed adjacent to the first deep furrow (34) is being ploughed onto the soil ploughed into the first deep furrow (34).

5. A plough for reversing the order of a top layer (30) of soil and a subjacent layer (31) of soil, comprising at least one first ploughshare (13) adjusted to a depth corresponding to the thickness of said top layer (30) of soil and said subjacent layer (31) of soil for forming a deep furrow (34); at least one second ploughshare (9) which is adjusted to a depth corresponding to the thickness of the top layer (30) of soil, the first ploughshare (13) having the same working width as the second ploughshare (9) and having been displaced laterally over a distance equal to the working width as well as in a forward direction relatively to the second ploughshare (9), so that said second ploughshare (9) can deposit a strip of the top layer (30) of soil in a deep furrow (34) adjacent to said strip, formed by the first ploughshare (13), characterized by further comprising support means (14,16), brushing along and smoothing both side walls of the deep furrow (34) behind the first ploughshare (13), for keeping the deep furrow clear.

6. A plough according to claim 5, characterized in that the support means comprise a first vertical support plate (14) mounted behind the first ploughshare (13), which support plate in use supports and brushes along the wall (35) of the deep furrow (34) that is proximal to the second ploughshare (9) and a second vertical support plate (16) mounted behind the first ploughshare (13), which support plate in operation supports and brushes along the wall (38) of the deep furrow (34) that is remote from the second ploughshare (9).

7. A plough according to claim 6, characterized in that the second support plate (14) extends rearwardly into the working area of the second ploughshare (9).

8. A plough according to claim 6, characterized in that the first and/or second vertical support plate (14,16) has a leading edge (15,17,18) curved to conform to the configuration of the first ploughshare (13).

9. A plough according to any one of claims 5-8, characterized by at least one horizontal knife coulter (20), which in operation makes a horizontal cut (21) at the height of the underside of the top layer (30) of soil before the top layer (30) of soil is moved by the second ploughshare (9).

10. A plough according to claim 9, characterized in that said at least one horizontal knife coulter (20) is mounted behind the second ploughshare (9).

11. A plough according to any one of claims 5-10, characterized by at least one plate-like float (51) which smoothes out and brings pressure to bear on the soil of the top layer (30') deposited in a deep furrow (34).

12. A plough according to claim 11, characterized in that said at least one float (51) is mounted in front of the first ploughshare (13) in laterally displaced position.

13. A plough according to claim 11 or 12, characterized in that said float (51) in operation is spring-biased into contact with the soil (30').

14. A plough according to any one of claims 11-13, characterized in that the float (51) comprises a substantially rectangular plate which is curved transversely to the direction of travel and is mounted at a slightly upward inclination, viewed in the direction of travel.

## Patentansprüche

1. Methode zur Umkehr der Reihenfolge einer oberen Bodenschicht (30) und einer unteren Bodenschicht (31), wobei in einem ersten Arbeitsgang eine sich bis in die untere Bodenschicht (31) erstreckende erste tiefe Furche (34) mittels einer ersten Pflugschar (13) gezogen wird und der aus dieser tiefen Furche gepflügte Boden auf einer Seite der tiefen Furche (34) abgelagert wird, wobei gleichzeitig der auf der anderen Seite neben der tiefen Furche liegende Streifen der oberen Bodenschicht durch eine zweite Pflugschar (9) in die tiefe Furche gepflügt wird, und wobei in einem zweiten Arbeitsgang an der Ursprungsstelle des in die erste tiefe Furche (34) gepflügten Streifens der oberen Bodenschicht eine nächste tiefe Furche (34) gebildet wird und der aus der nächsten tiefen Furche (34) kommende Boden auf dem in die erste tiefe Furche (34) gepflügten Boden der oberen Schicht abgelagert wird, dadurch gekennzeichnet, daß beide Seitenwände (35, 38) der tiefen Furche (34) geglättet und seitlich unterstützt werden, bevor und während der Boden der oberen Schicht in die tiefe Furche (34) gepflügt wird.

2. Methode nach Anspruch 1, dadurch gekennzeichnet, daß der in eine tiefe Furche (34) gepflügte Boden der oberen Schicht auf der Oberseite geglättet und angedrückt wird, bevor der aus einer nächsten tiefen Furche (34) kommende Boden auf den in die tiefe Furche (34) gepflügten Boden der oberen Schicht gepflügt wird.

3. Methode nach einem der vorhergehenden Ansprüche, dadurch gekennzeichnet, daß ein horizontaler Einschnitt (21) auf der Höhe der Unterseite der oberen Bodenschicht (30) gemacht wird, bevor die obere Bodenschicht (30) in eine benachbarte tiefe Furche (34) gepflügt wird.

4. Methode nach einem der vorhergehenden Ansprüche, dadurch gekennzeichnet, daß der in eine erste tiefe Furche (34) gepflügte Boden der oberen Schicht (30) gegen seitlichen Druck, ausgehend von der ersten Pflugschar (13), festgehalten wird, während der Boden aus einer neben der ersten tiefen Furche (34) gebildeten zweiten tiefen Furche (34) auf den in die erste tiefe Furche (34) gepflügten Boden gepflügt wird.

5. Pflug zur Umkehr der Reihenfolge einer oberen Bodenschicht (30) und einer unteren Bodenschicht (31), versehen mit wenigstens einer ersten Pflugschar (13), die auf eine der Dicke der oberen Bodenschicht (30) und der unteren Bodenschicht (31) entsprechende Tiefe eingestellt ist, um eine tiefe Furche (34) zu bilden, und mit wenigstens einer zweiten Pflugschar (9), die auf eine der Dicke der oberen Bodenschicht (30) entsprechende Tiefe eingestellt ist, wobei die erste Pflugschar (13) dieselbe Arbeitsbreite wie die zweite Pflugschar (9) hat und seitlich über einen Abstand gleich der Arbeitsbreite sowie in Vorwärtsrichtung relativ zu der zweiten Pflugschar (9) verschoben worden ist, so daß die zweite Pflugschar (9) einen Streifen der oberen Bodenschicht (30) in einer tiefen Furche (34) neben dem durch die erste Pflugschar (13) gebildeten Streifen ablagern kann, dadurch gekennzeichnet, daß weiter hinter der ersten Pflugschar (13) Stützmittel (14, 16) vorgesehen sind, die über beide Seitenwände der tiefen Furche (34) streichen und diese glätten, um die tiefe Furche offenzuhalten.

6. Pflug nach Anspruch 5, dadurch gekennzeichnet, daß die Stützmittel eine hinter der ersten Pflugschar (13) angeordnete erste vertikale Stützplatte (14), die im Betrieb die nahe der zweiten Pflugschar (9) liegende Wand (35) der tiefen Furche (34) stützt und über diese streicht, und eine hinter der ersten Pflugschar (13) angeordnete zweite vertikale Stützplatte (16), die im Betrieb die von der zweiten Pflugschar (9) abgekehrte Wand (38) der tiefen Furche (34) stützt und über diese streicht, umfassen.

7. Pflug nach Anspruch 6, dadurch gekennzeichnet, daß die zweite Stützplatte (14) sich rückwärts bis in den Arbeitsbereich der zweiten Pflugschar (9) erstreckt.

8. Pflug nach Anspruch 6, dadurch gekennzeichnet, daß die erste und/oder zweite vertikale Stützplatte (14, 16) eine in Anpassung an die Form der ersten Pflugschar (13) gebogene Vorderkante (15, 17, 18) aufweist.

9. Pflug nach einem der Ansprüche 5 bis 8, gekennzeichnet durch mindestens ein horizontales Messersech (20), das im Betrieb einen horizontalen Einschnitt (21) auf der Höhe der Unterseite der oberen Bodenschicht (30) macht, bevor die obere Bodenschicht (30) von der zweiten Pflugschar (9) bewegt wird.

10. Pflug nach Anspruch 9, dadurch gekennzeichnet, daß das mindestens eine horizontale Messersech (20) hinter der zweiten Pflugschar (9) angeordnet ist.

11. Pflug nach einem der Ansprüche 5 bis 10, gekennzeichnet durch mindestens eine Streichplatte (51), die den in einer tiefen Furche (34) abgelagerten Boden der oberen Schicht (30') glättet und andrückt.

12. Pflug nach Anspruch 11, dadurch gekennzeichnet, daß mindestens eine Streichplatte (51) seitlich versetzt vor der ersten Pflugschar (13) angeordnet ist.

13. Pflug nach Anspruch 11 oder 12, dadurch gekennzeichnet, daß die Streichplatte (51) im Betrieb unter Federspannung gegen den Boden (30') gedrückt wird.

14. Pflug nach Anspruch 11 bis 13, dadurch gekennzeichnet, daß die Streichplatte (51) eine im wesentlichen rechteckige Platte ist, die quer zur Fortbewegungsrichtung gebogen ist und in der Fortbewegungsrichtung gesehen ein wenig aufwärts geneigt angeordnet ist.

## Revendications

1. Procédé pour inverser l'ordre d'une couche supérieure de terre (30) et d'une couche sous-jacente de terre (31), dans lequel au cours d'une première passe un premier sillon profond (34) pénétrant dans la couche sous-jacente de terre (31) est réalisé au moyen d'un premier soc de charrue (13), le sol labouré hors dudit sillon profond étant déposé d'un côté dudit sillon profond (34), tandis que la bande de couche supérieure de terre située de l'autre côté adjacent au sillon profond est basculée simultanément dans ledit sillon profond par un second soc de charrue (9), et qu'un sillon profond voisin (34) est formé au cours d'une seconde passe à l'emplacement initial de la bande de couche supérieure de terre basculée dans ledit premier sillon profond (34), la terre provenant dudit sillon profond voisin (34) étant déposée au-dessus de la terre de la couche supérieure basculée dans ledit premier sillon profond (34), caractérisé en ce que les deux parois latérales (35, 38) dudit sillon profond (34) sont lissées et soutenues latéralement avant et pendant le basculement de la terre de la couche supérieure dans le sillon profond (34).

2. Procédé selon la revendication 1, caractérisé en ce que la terre de la couche supérieure qui a été basculée dans un sillon profond (34) est lissée et comprimée à la surface supérieure avant que la terre provenant d'un sillon profond voisin (34) soit basculée sur la terre de la couche supérieure qui a été basculée dans ledit sillon profond.

3. Procédé selon l'une quelconque des revendications précédentes, caractérisé en ce qu'une découpe horizontale (21) est réalisée à la hauteur de la face inférieure de la couche supérieure de terre (30), avant que ladite souche supérieure de terre (30) soit basculée dans un sillon profond voisin (34).

4. Procédé selon l'une quelconque des revendications précédentes, caractérisé en ce que la terre de la couche supérieure (30) basculée dans un premier sillon profond (34) est retenue par la pression latérale exercée par le premier soc de charrue (13), tandis que la terre provenant d'un second sillon profond (34) formé en position adjacente au premier sillon profond (34), est basculée sur la terre basculée dans le premier sillon profond (34).

5. Charrue pour inverser l'ordre d'une couche supérieure de terre (31) et d'une couche sous-jacente de terre (31), comprenant au moins un premier soc de charrue (13) ajusté à une profondeur correspondant à l'épaisseur de la couche supérieure de terre (30), le premier soc de charrue (13) possédant la même largeur de travail que le second soc de charrue (9) et ayant été déplacé latéralement d'une distance égale à la largeur de travail ainsi que dans une direction vers l'avant par rapport au second soc de charrue (9), de sorte que ledit second soc de charrue (9) puisse déposer une bande de la couche supérieure de terre (30) dans un sillon profond adjacent à ladite bande et formé par le premier soc de charrue (13), caractérisée en ce qu'elle comprend en outre des moyens de soutien (14, 16) brossant et lissant les deux faces latérales du sillon profond (34) en arrière du premier soc de charrue (13), pour maintenir propre le sillon profond.

6. Charrue selon la revendication 5, caractérisée en ce que les moyens de soutien comprennent un premier plateau vertical de soutien (14) monté derrière le premier soc de charrue (13), ce plateau de soutien soutenant et brossant en utilisation la paroi (35) du sillon profond (34) située en position proche du second soc de charrue (9), et un second plateau vertical de soutien (16) monté derrière le premier soc de charrue (13), ce plateau de soutien soutenant et brossant en fonctionnement la paroi (38) du sillon profond (34) qui est éloignée du second soc de charrue (9).

7. Charrue selon la revendication 6, caractérisée en ce que le second plateau de soutien (16) s'étend vers l'arrière, dans la zone de travail du second soc de charrue (9).

8. Charrue selon la revendication 6, caractérisée en ce que le premier et/ou le second plateau vertical de soutien (14, 16) possèdent un bord d'attaque (15, 17, 18) incurvé pour s'adapter à la configuration du premier soc de charrue (13).

9. Charrue selon l'une quelconque des revendications 5 à 8, caractérisée en ce qu'au moins un coutre horizontal (20), qui en fonctionnement réalise une découpe horizontale (21) à la hauteur de la face inférieure de la couche supérieure de terre (30), avant que la couche supérieure de terre (30) soit déplacée par le second soc de charrue (9).

10. Charrue selon la revendication 9, caractérisée en ce qu'au moins un coutre horizontal (20) est monté derrière le second soc de charrue.

11. Charrue selon l'une quelconque des revendications 5 à 10, caractérisée par au moins un flotteur (51) en forme de plateau, qui lisse et exerce une pression poussant la terre de la couche supérieure (30') déposée dans un sillon profond (34).

12. Charrue selon la revendication 11, caractérisée en ce qu'au moins un desdits flotteurs (51) est monté en avant du premier soc de charrue (13), en position décalée latéralement par rapport à celui-ci.

13. Charrue selon la revendication 11 ou 12, caractérisée en ce qu'en fonctionnement ledit flotteur (51) est repoussé en contact avec la terre (30') par un ressort.

14. Charrue selon l'une quelconque des revendications 11 à 13, caractérisée en ce que le flotteur (51) comprend un plateau en substance rectangulaire incurvé transversalement vers la direction de déplacement, et monté sous une légère inclinaison vers le haut par rapport à la direction de déplacement.
